# EUROPEAN PATENT SPECIFICATION

(11) **EP 0 778 161 B1**
(45) Date of publication and mention of the grant of the patent: **20.10.1999**
(21) Application number: 96308815.8
(22) Date of filing: 05.12.1996
(51) Int. Cl.: B60C 9/02, B60C 15/00, B29D 30/34, B29D 30/48

(54) **Pneumatic tyre and its manufacturing method**
Luftreifen und Verfahren zur Herstellung
Pneumatique et procédé de fabrication

(30) Priority: 08.12.1995 JP 32070795; 08.12.1995 JP 32070895
(43) Date of publication of application: 11.06.1997
(73) Proprietor: SUMITOMO RUBBER INDUSTRIES LIMITED, Kobe-shi, Hyogo-ken (JP)
(72) Inventor: Ueyoko, Kiyoshi, Kobe-shi, Hyogo-ken (JP)
(74) Representative: Stewart, Charles Geoffrey

(56) References cited:
- DE-A- 2 408 474
- DE-A- 2 410 685
- FR-A- 417 102
- FR-A- 2 132 509
- GB-A- 2 179 009

## Description

The present invention relates to a pneumatic tyre heightened in bead durability and reduced in weight, and its manufacturing method.

In various pneumatic tyres for a passenger car or a heavy duty vehicle, generally, both ends of the carcass are fixed by turning up around the bead core. The turned up height of the carcass is usually set higher than the rim flange height in order to fix securely and thus prevent the carcass from blowing through due to the internal inflation pressure or load/weight.

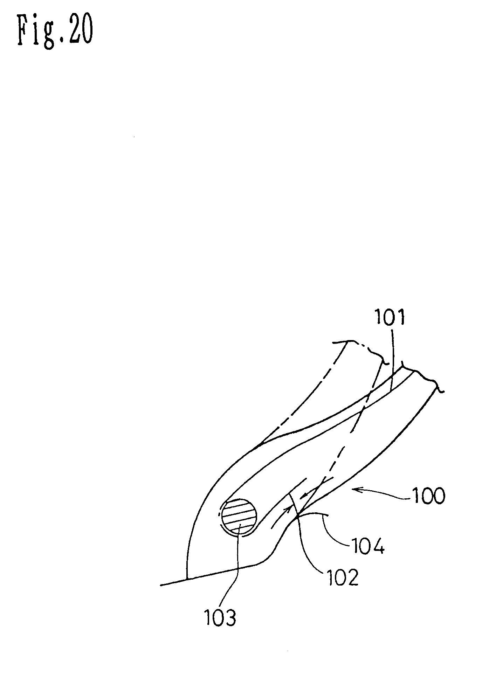

When the pneumatic tyre contacts the ground, however, it is deformed, as shown in FIG. 20, so that the portion 100 of the bead above the rim flange 104 is tilted axially outwardly, and therefore the stress of bending and compressing acts repeatedly in the turned up portion 102 of the carcass ply 101, and this stress is concentrated on the outer edge of the turned up portion 102. At the outer edge of the turned up portion 102, since each carcass cord has a cut end, its adhesion with the surrounding rubber is inferior, and together with the stress concentration, this tends to lead to looseness between the cord and rubber. This may progress into separation of the carcass 101, and bead damage is likely to occur. In particular, such bead damage tends to occur particularly in radial tyres due to the increased degree of deformation of the bead caused by the rigidity of the tread. Especially in tyres for heavy load vehicles the deformation of the tyre is severe.

To avoid such damage, hitherto, the amount of rubber in the bead apex has been increased to increase the cushioning effect and thus extend the time to reach looseness. In another construction cord reinforcing layers were provided around the bead core 103, inside and outside of the turned up portion 102 to increase the rigidity of the bead 100 to decrease the amount of deformation itself.

Such measures are, however, insufficient in damage prevention especially in tyres for heavy load, and further due to the increased volume of the bead, the tyre weight is increased and fuel economy is spoiled.

A tire and a method according to the preamble of independent claims 1 and 8 is known e.g. from GB-A-2179009.

It is hence a first object of the invention to provide a pneumatic tyre and a manufacturing method for said tyre capable of enhancing the adhesion of the cord and rubber at both ends of the carcass ply, decreasing and dispersing the stress acting on both ends of the ply, substantially increasing bead durability, and contributing to a reduction of weight.

It is a second object to provide a pneumatic tyre and its manufacturing method capable of enhancing the strength of the bead core.

It is a third object to provide a pneumatic tyre and a manufacturing method therefor having a turned-up structure of the carcass ply capable of further enhancing bead durability while promoting the weight reduction of tyre.

According to one aspect of the present invention, a pneumatic tyre comprises the features of independent claim 1

The carcass cord ply preferably has a parallel cord arrangement in a ply main portion extending between the bead cores.

The bead core may have a lower bead core portion formed by a lower bead cord being either continuous to or discontinuous to said carcass cord and spirally wound in the tyre's circumferential direction.

The outer end of the carcass cord ply may be terminated inside of the bead core or substantially terminated on a radially inner surface of the bead core, or projected from the bead core in the tyre axial direction so as to form a projecting portion. The projecting portion may be turned up radially outwardly and terminated on an axially outer surface of the bead core or a rubber bead apex. Alternatively the projecting portion may be turned up radially outwardly and extend between the bead core and the rubber bead apex, and terminated between the bead core and the bead apex rubber or on an axially inner surface of the rubber bead apex rubber.

In a second aspect the invention provides a manufacturing method for a pneumatic tyre comprising the steps comprised in independent claim 8.

In the carcass ply forming step, it is preferable to arrange the carcass cord substantially parallel in a ply main portion extending between the bead cores.

The shaping step may include a side-wall forming step of fitting rubber side-wall by inflation of side formers provided at both sides of the principal tyre former.

When the bead core has a lower bead core portion and an upper bead core portion, the lower bead core portion may be formed by spirally winding a lower bead cord either continuously or non-continuously to the carcass cord prior to the carcass ply forming step.

The bead forming step may form the bead core such that the side edge of the ply base body is aligned with the axially outer surface of the bead core, or aligned inwardly of the axially outer side surface of the bead core, or projecting from the axially outer side surface of the bead core.

An embodiment of the present invention will now be described, by way of example, referring to the attached diagrammatic drawings, in which:
FIG. 1 is a sectional view showing an embodiment of a pneumatic tyre formed by a manufacturing method of the invention;
FIG. 2 is a magnified partial sectional view of the bead area;
FIG. 3 is a perspective view showing the cord arrangement of the carcass together with the bead core;
FIG. 4 is a schematic diagram showing an example of zigzag arrangement of carcass cords;
FIG. 5 is a schematic diagram showing other example of zigzag arrangement of carcass cords;
FIG. 6 is a schematic diagram showing a different example of zigzag arrangement of carcass cords;
FIGS. 7(A) to 7(F) are schematic sectional views showing examples of sectional shapes of the bead core;
FIGS. 8(A) to 8(B) are schematic sectional views for explaining the action of the carcass ply;
FIGS. 9(A) to 9(C) are schematic sectional views showing examples of bead structures;
FIGS. 10(A) and 10(B) are schematic sectional views showing other examples of bead structures;
FIGS. 11(A) and 11(B) are schematic sectional views showing further different examples of bead structures;
FIGS. 12(A) and 12(B) are schematic diagrams for explaining the inner liner mounting step and carcass ply forming step;
FIGS. 13(A) and 13(B) are schematic diagrams for explaining the bead forming step and junction step;
FIG. 14 is a schematic diagram for explaining the shaping step;
FIG. 15 is a schematic perspective view for explaining the carcass ply forming step;
FIG. 16 is a schematic perspective view for explaining the bead forming step;
FIG. 17 is a schematic sectional view for explaining the lower bead core portion forming step;
FIG. 18 is a schematic sectional view for explaining an example of turning up step of both ends of the carcass ply;
FIG. 19 is a schematic sectional view for explaining another example of the turning up step of both ends of carcass ply; and
FIG. 20 is a schematic sectional view for explaining the stress acting on the bead when the tyre is deformed.

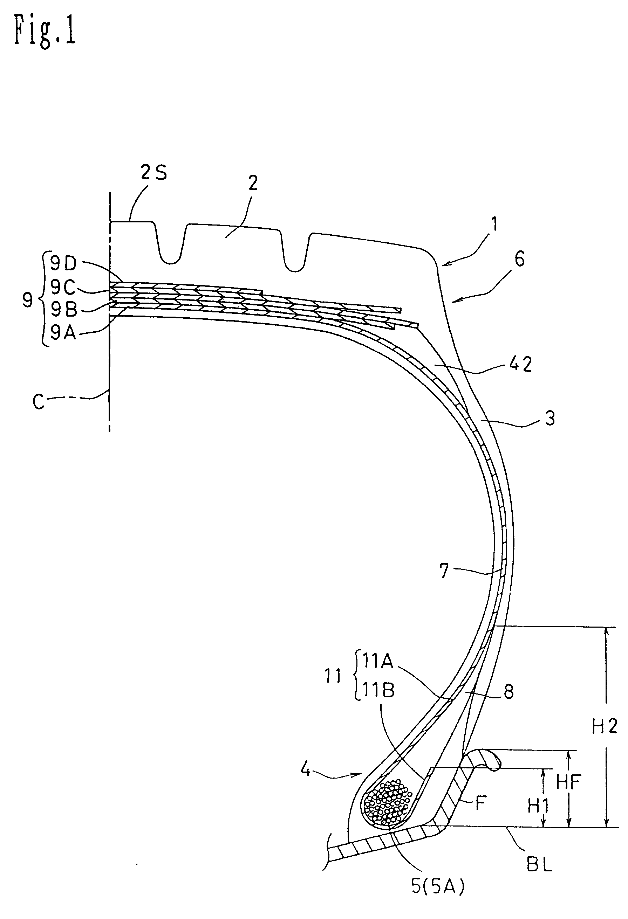

FIG. 1 shows a pneumatic radial tyre 1 for a heavy duty vehicle, wherein the tyre 1 has a toroidal tyre base body 6 comprising a tread 2, side walls 3 extending radially inward from both edges of the tread 2, and bead parts 4 positioned at an inner end of both side walls 3 and reinforced by an annular bead core 5. The tyre 1 has a reinforcing carcass 7 extending along the tyre main body 6 and a tough belt layer 9 disposed radially outside the carcass 6.

The belt layer 9 is composed of at least one belt ply, or, in this embodiment, first, second, third and fourth belt plies 9A to 9D arranged sequentially on the carcass in this order. The first belt ply 9A has reinforcement cords arranged at an angle of about 60 to 70 degrees to the tyre's equator C, and the second, third and fourth belt plies 9B to 9D have belt cords arranged at angles of about 10 to 25 degrees. Incidentally, between the second and third belt plies 9B, 9C, the directions of the cord inclination to the tyre's equator C are different to form a trussed or triangulated structure, which increases the belt rigidity, and reinforces the tread 2 with a strong hoop effect.

The belt cords may be composed of, for example, steel, aromatic polyamide, aromatic polyester, high elasticity polyethylene, and other high modulus fibre cords. Each belt cord is cut and interrupted at the ply outer edge, and, for example, the first belt ply 9A is nearly same in width as the third belt ply 9C, and is narrower than the second belt ply 9B, so that the outer end positions are different. The fourth belt ply 9D of the minimum width functions also has a breaker for protecting the inside belt plies 9A to 9C and the carcass 7. Both ends of belt layer 9 gradually depart from the carcass 7, and this space is filled with a relatively soft rubber cushion 42.

The carcass 7 is composed of at least one, in this embodiment one, carcass ply 11 reinforced by carcass cords 10 extending at an angle of 75 to 90 degrees to the tyre's equator C. The carcass ply 11 has a toroidal main portion 11A straddling between the bead cores 5 and turned up portions 11B turned up around the bead cores 5, from the inside to the outside in the axial direction of the tyre in this embodiment by passing around the radially inner surface of the bead core 5. The turned up portion 11B extends along the axially outer surface of a rubber bead apex 8 extending radially outwardly from the bead core 5.

The turned-up height H1 from the bead base line BL is smaller than the bead apex height H2, and, in this embodiment, smaller than the height HF of the rim flange F. Herein, the bead base line BL refers to the line in the tyre axial direction passing the axially outer end point of the bead base surface 4S, and it is the reference line for selecting the rim diameter of the applicable rim.

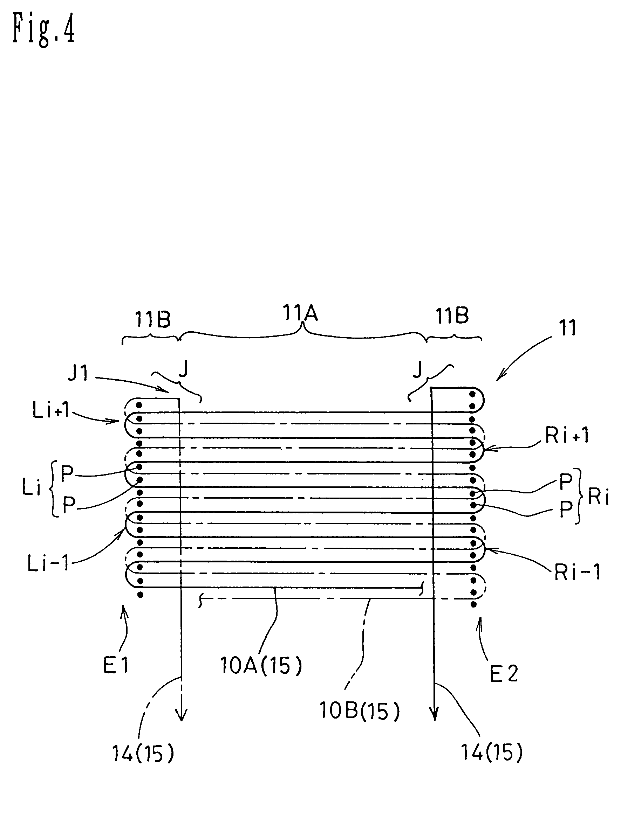

The carcass ply 11 is a carcass cord ply wherein at least one endless carcass cord 10 extends around the tyre's circumferential direction while being folded at both edges of the ply 11 alternately to right and left in zigzag fashion, as shown in FIG. 4 to provide a main portion 11A and turned up portions 11B.

In other words, the carcass cord ply 11 has a multiplicity of folding points Li (i=1...n) arranged at equal intervals in the circumferential direction at one edge E1 of the ply 11 and a multiplicity of folding points Ri (i=1...n) arranged at the other edge E2. The endless carcass cord 10 is folded alternately around folding points at both outer edges E1, E2 in the sequence of Ri-1, Li-1, Ri, Li, Ri+1, Li+1. In this carcass cord ply 11, the number of cords per 5 cm of ply width is about 18/5 cm to 40/5 cm, and the carcass cord 10 is arranged substantially parallel without intersecting each other at least in the main portion 11A. If intersecting, a shearing force occurs, which may lead to breakage of cords.

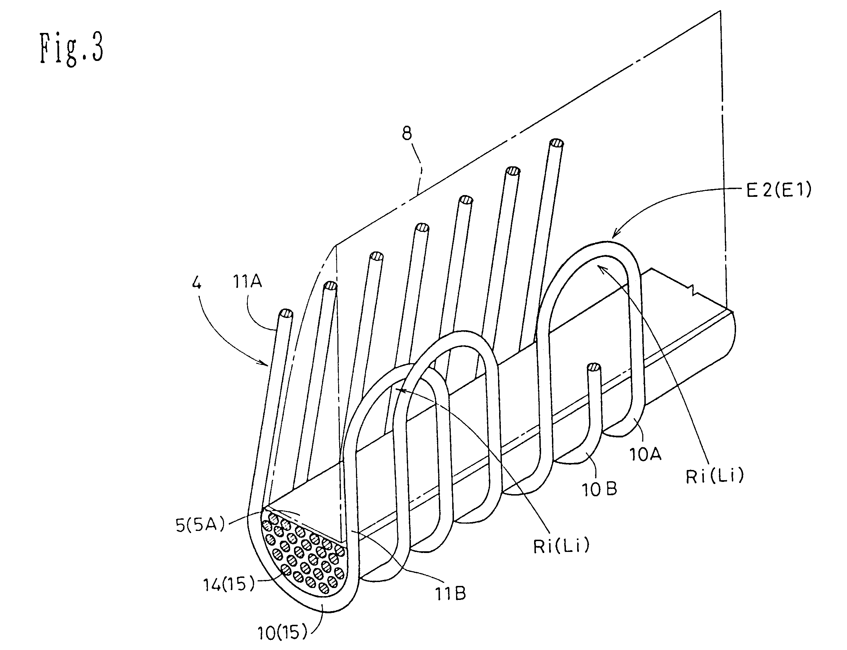

Meanwhile, since the ply outer edges E1, E2 are terminated at the bead parts 4 or side walls 3 as shown in FIG. 3, the folding points Ri, Li are disposed at both side-portions of the tyre 1.

The carcass cord ply 11 is formed by using one to several endless carcass cords 10, and an example of using two cords 10A, 10B is shown in FIG. 4. At this time, 2n point elements are arranged in each one of the outer edges E1, E2 at equal intervals in the circumferential direction, and one folding point occurs as each cord goes around two point elements P. Thus each carcass cord 10A extends zigzag in the circumferential direction while folding at every two point elements P. The other carcass cord 10B also is folded at every two point elements P and is one 1/2 pitch in the circumferential direction out of step as compared with the first carcass cord 10A, that is, by one point element P. Thus, the carcass cords 10A, 10B are arranged parallel in the main portion 11A.

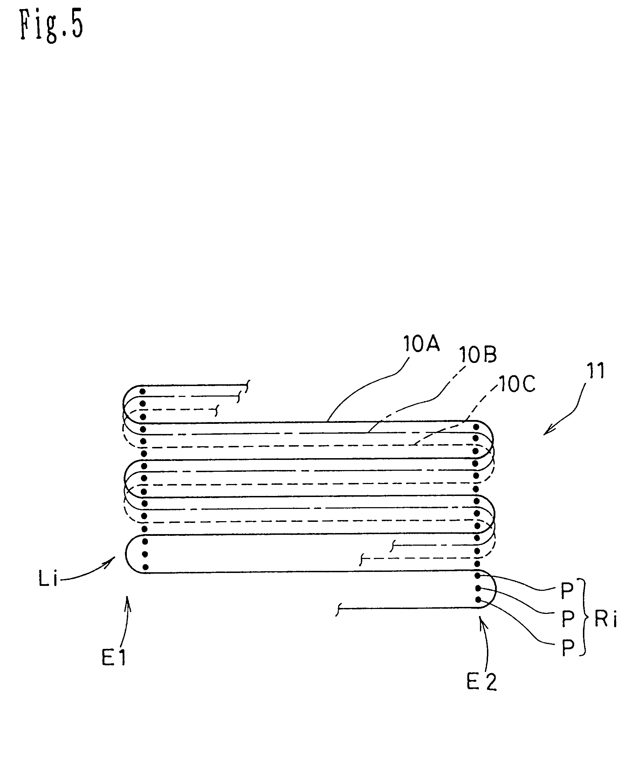

FIG. 5 shows a case forming the carcass cord ply 11 by using three carcass cords 10A, 10B, 10C. In this case, 3n point elements P are arranged in each one of the outer edges E1, E2, and the carcass cords 10A, 10B, 10C are folded around three point elements P to give the zigzag form. The zigzag arrangements of the respective cords are shifted with respect to each other by 1/3 pitch, that is, shifted in phase by one point element each. Thus, Three carcass cords 10A, 10B, 10C are arranged parallel.

When forming two to m-sheets of carcass plies 11, the zigzag arrangement of carcass cords 10 is repeated m turns in the circumferential direction.

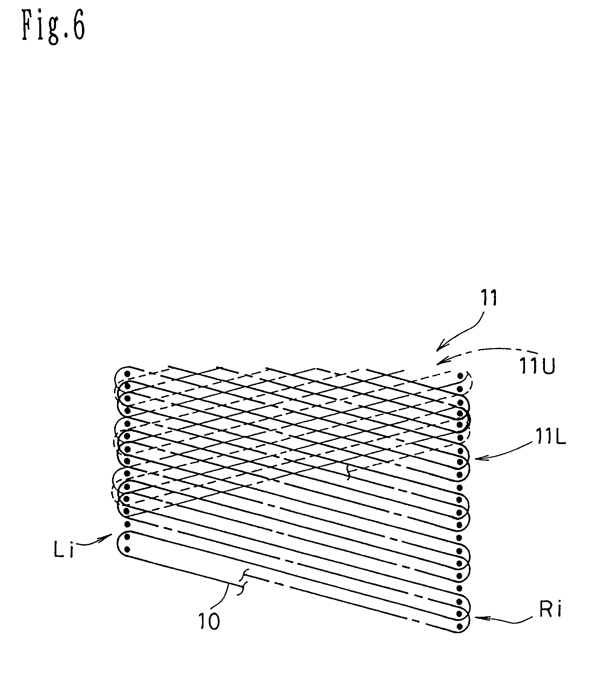

Incidentally, when forming a tyre having a bias structure, as shown in FIG. 6, the carcass cord 10 is arranged zigzag between folding points Li, Ri at a cord angle of, for example, left-upward inclination of 35 to 60 degrees to the tyre's equator C to compose an inner endless carcass cord ply 11L, and in the second turn, by being laid successively at a right-upward cord angle of 35 to 60 degrees. Thus an outer endless carcass cord ply 11U is formed.

The bead core 5 as shown in FIG 3, has at least an upper bead core portion 5A of the so-called single wound type. The upper bead core portion 5A is disposed radially outside the carcass cord ply 11 in the bead part 4, and is formed by spirally winding an upper bead cord 14 in one or more stages in the circumferential direction. A continuous cord 15 continuous to the carcass cord 10 is employed as the upper bead cord 14. That is, as shown in FIG. 4, the continuous cord 15 in the zigzag arrangement is continuously transferred to spiral winding from its terminating position J1, thereby forming the carcass cord ply 11 and upper bead core portion 5A.

Herein, by "continuous," it means that the upper bead cord 14 and carcass cord 10 are one continuous cord without interruption, or that the upper bead cord 14 and carcass cord 10 are integrally connected to be continuous by joining the interruption by adhesion, welding or the like. In other region than the transition region J from zigzag to spiral winding, if the upper bead cord 14 is interrupted due to material shortage or the like in the process of spiral winding, or the carcass cord 10 is interrupted in the midst of the zigzag arrangement, the spiral winding or folding may be continued from the interrupted end by a new cord without adhering, and the new cord must be the same as the cord before interruption. When connecting integrally by adhesion or welding, if necessary, the upper bead cord 14 and carcass cord 10 may be different in material, thickness, or twist structure.

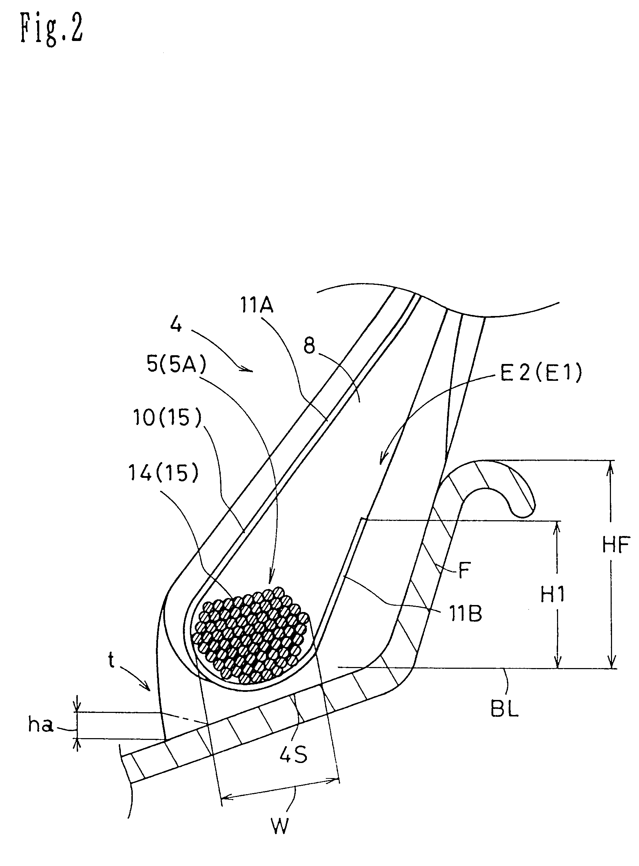

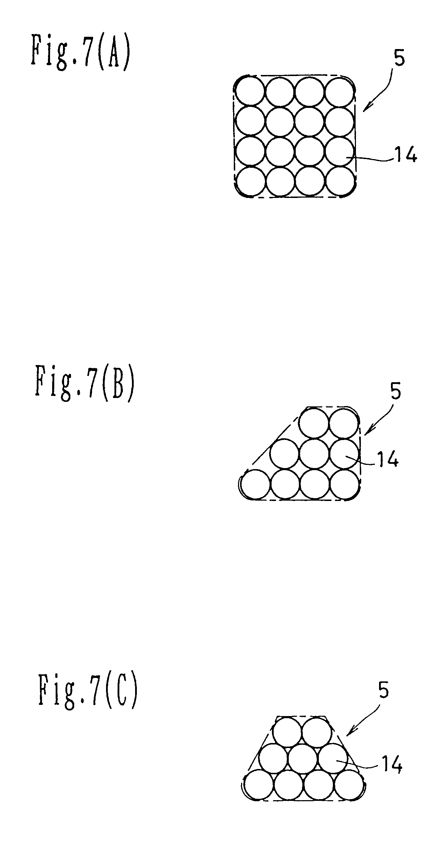

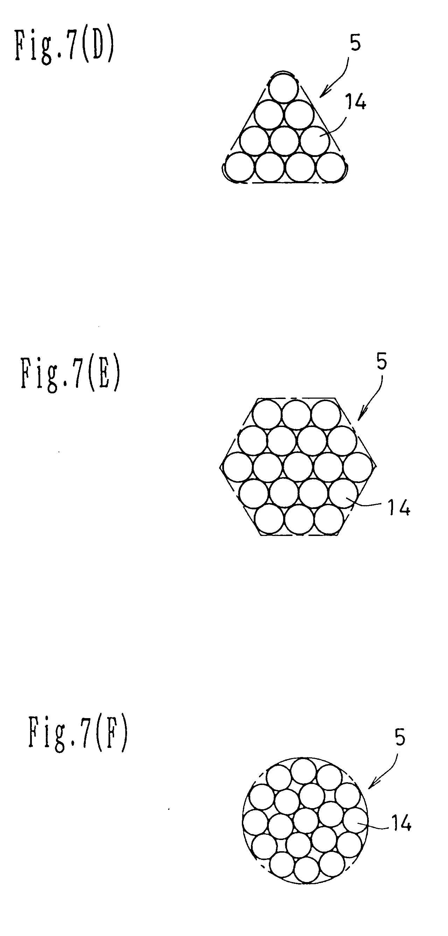

In this embodiment, the bead core 5 is formed only of the upper bead core portion 5A, and the bead core 5 or upper bead core portion 5A may have various sectional shapes aside from the flat hexagonal shape shown in FIG. 2, such as square, rectangle, trapezoid, parallelepiped, other quadrangle, triangle, hexagon, circle, etc. as shown in FIG. 7(A) to 7(F).

As the continuous cord 15, nylon, rayon, polyester, vinylon, aromatic polyamide, aromatic polyester, high elasticity polyethylene, organic fibre cord, steel, and other metal fibre cord may be used. In order to reinforce the fitting of bead and rim, and suppress rim deviation, resulting heat generation or deformation of bead base 4S, it is preferred to define the cord initial tensile elasticity E at 1500 kgf/mm² or more.

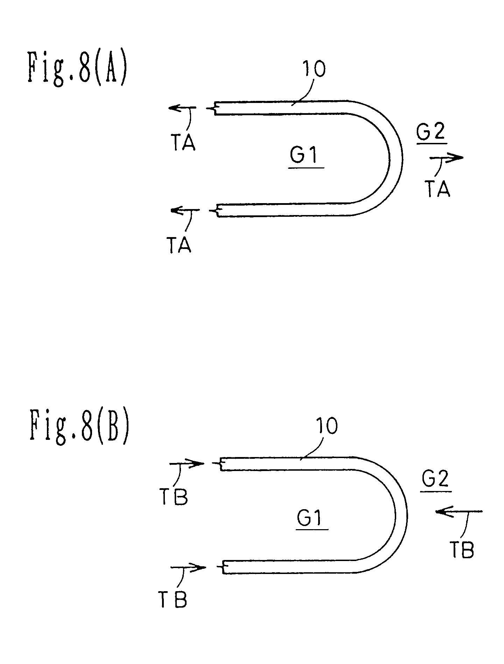

Thus, in this embodiment, since the carcass cord 10 repeatedly folds in a U-form alternately at the ply outer edges E1, E2, as shown in FIG. 8(A), 8(B), it resists and withstands both the tensile force TA acting on the carcass cord 10 due to the internal inflation pressure or the like, and the compressive force Tb acting due to bead deformation which compresses the U-shaped cord and the inside rubber G1 is resists, and to the compressive force TB acting due to bead deformation, the load for pulling the inside rubber G1 resists, thereby decreasing the stress between the folding end and outside rubber G2. By this U-shape, moreover, the stress itself is dispersed. Still more, the usual cut end of the cord, which is inferior in adhesion and is a weak point in strength due to stress concentration, is eliminated from the bead 4 since the carcass cord 10 and upper bead cord 14 are continuous.

As a result, the turned-up height H1 can be set smaller than the rim flange height HF while still preventing blow-through of the carcass 7, and enhancement of bead durability and a notable reduction of weight are achieved. If the turned-up height H1 is higher than the rim flange height HF, the cord looseness in the outer edges E1, E2 can be effectively suppressed while eliminating the formation of a conventional cord reinforcing layer, so that enhancement of bead durability and reduction of weight may both be achieved.

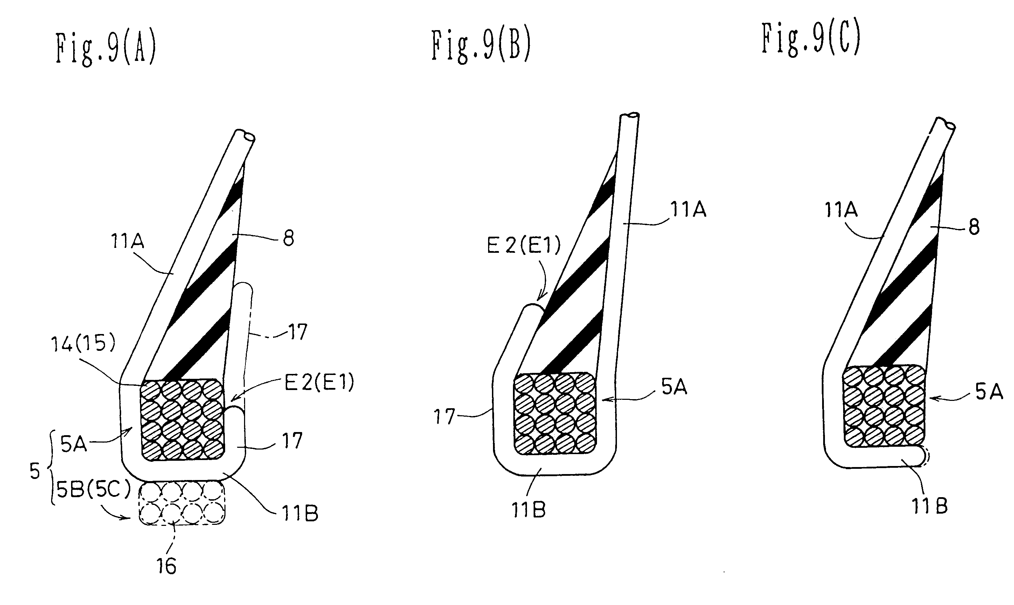

As the bead core 5, in addition to the upper bead core portion 5A, a lower bead core portion 5B of single wound type may be also provided radially inside the ply 11, as shown in FIG. 9(A), by spirally winding a lower bead cord 16 in one or more stages in the circumferential direction, and thereby the core strength and core rigidity are enhanced, so that the fitting with the rim may be reinforced. The turned up portion 11B may be positioned between the upper and lower bead core portions 5A and 5B and this is effective for preventing blow-through of carcass 7.

The lower bead cord 16 may be continuous with the cord 15, but may be also formed as a non-continuous separate cord. For example, when a conventional steel cord is employed for the lower bead core portion 5B, a necessary rim fitting force is obtained even if a low modulus cord of initial tensile elasticity of less than 1500 kgf/mm² such as nylon and polyester is employed as the continuous cord 15.

As the bead core 4, instead of the lower bead core portion 5B, for example, a core portion 5C of so-called tape or creel bead type can be used, wherein a rubber coated tape having four to six parallel cords of steel cords or the like is wound to form the bead coil. Such a tape bead type core portion 5C may be provided between the radially inner surface of the upper bead core portion 5A and the endless carcass cord ply 11.

The turned up portion 11B, as in the embodiment shown in Fig. 2 and Fig. 9(A), has a portion 17 projecting axially outwardly from the upper bead core portion 5A by passing through the radially inner surface of the upper bead core portion 5A. The projecting portion 17 is turned up radially outwards, and is terminated along the axially outer surface of the upper bead core portion 5A or the axially outer surface of the bead apex rubber 8, or as shown in Fig. 9(B), the projecting portion 17 is turned up in reverse direction, that is, the portion 17 projecting axially inwards from the upper bead core portion 5A is turned up radially outwards, and is terminated along the axially inner surface of the bead core portion 5A or the rubber bead apex 8 or the like.

The turned up portion 11B, alternatively as shown in FIG. 9(C), may be terminated substantially on the radially inner surface of the bead core 5. This case, as shown by the single dot chain line in the same drawing, has the outer edges E1, E2 terminated so as to slightly project from the side of the bead core 5 in the tyre axial direction.

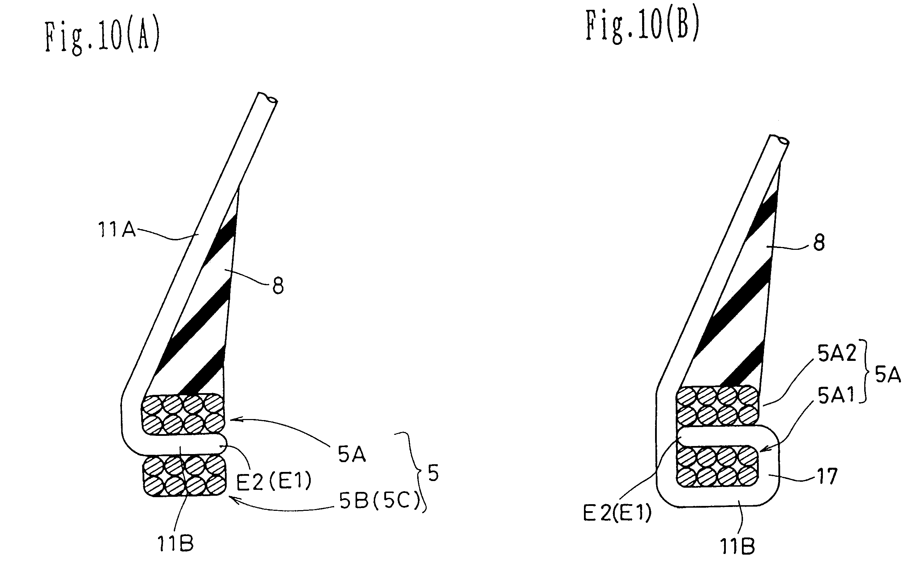

In a further different example of the turned up portion 11B, when the bead core 5 is composed of an upper bead core portion 5A and a lower bead core portion 5B or the core portion 5C, the outer edges E1, E2 of the turned up portion 11B are terminated within the bead core 5. More specifically, as shown in FIG. 10(A), the outer edges E1, E2 of the turned up portion 11B are terminated on the radially inner surface of the upper bead core 5A and are held between the upper bead core portion 5A and lower bead core portion 5B or the core portion 5C. Or, as shown in FIG. 10(B), the upper bead core portion 5A may be divided into a radially inner portion 5A1 and a radially outer portion 5A2, and the portion 17 projecting axially outside through the radially inner surface of the upper bead core portion 5A is turned up radially outwards, and the outer edges E1, E2 are terminated by being held between the inner and outer portions 5A1, 5A2. Then again, either the portion 5A1 or 5A2 may be formed by the core portion 5C, and be terminated by being held between the core portion 5C and the other portion 5A1 or 5A2.

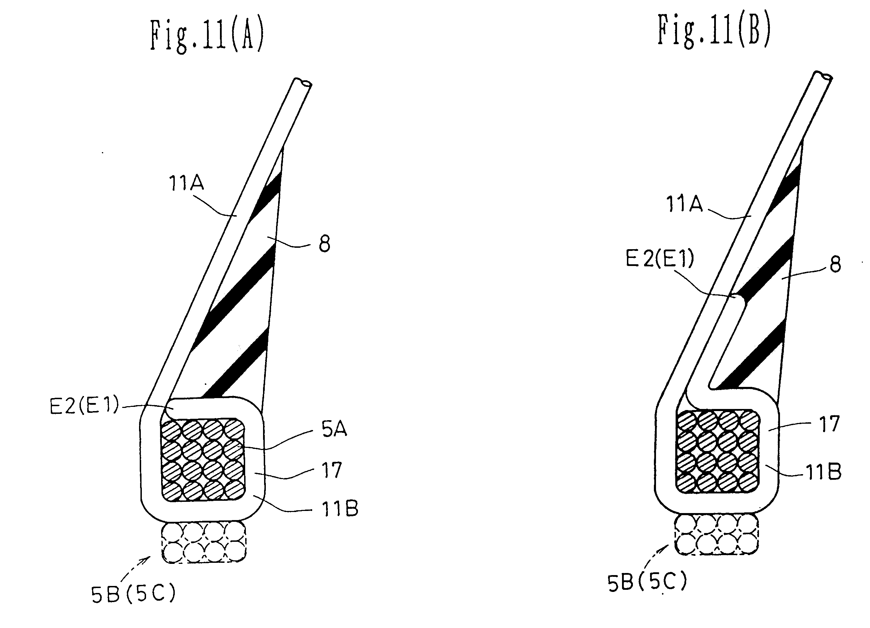

In a still different example of the turned up portion 11B, as shown in FIG.11 (A), the portion 17 projecting axially outwards from the upper bead core portion 5A is turned up radially outwardly, and the outer edges E1, E2 are terminated by being held between the upper bead core portion 5A and rubber bead apex 8, or, as shown in FIG. 11 (B), by passing through between the upper bead core portion 5A and rubber bead apex 8, so that they are terminated by being held between the carcass main portion 11A and rubber bead apex 8.

Among the above structures of turned up portion 11B, those designed to terminate the outer edges E1, E2 by holding can securely prevent cord looseness and blow-through of the outer ends E1, E2.

A manufacturing method of a such pneumatic tyre 1 will now be described below.

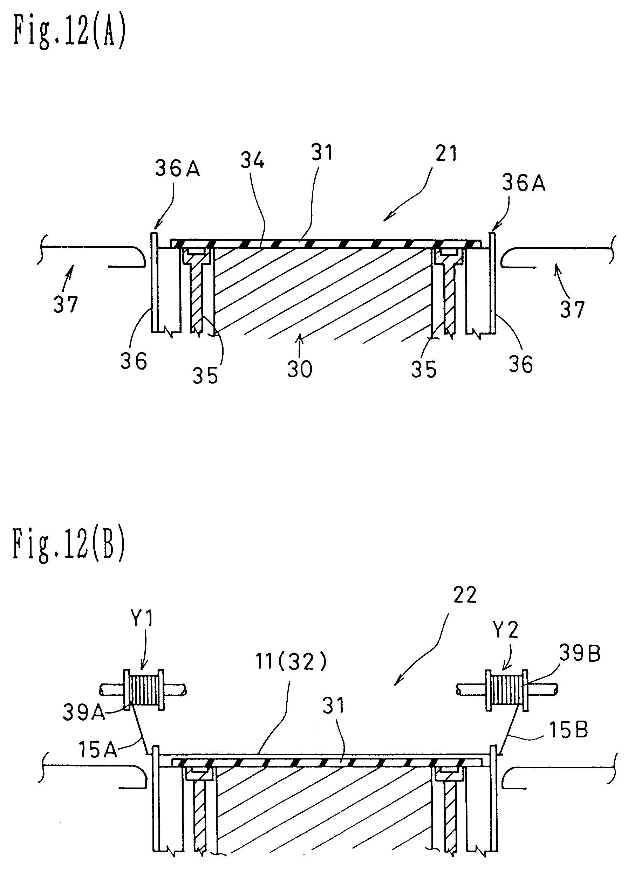

The manufacturing method comprises, as shown in Figs. 12 to 14, an inner liner mounting step 21 for wrapping an inner liner rubber sheet 31 around the outer circumference of a principal tyre former 30, a carcass ply forming step 22 for forming a tubular ply base body 32 for the carcass cord ply 11 on the outer circumference of the inner liner rubber sheet 31, a bead forming step 23 for forming bead cores 5, 5 on both sides of the ply base body 32 by spirally winding a continuous cord 15, a junction step 24 for mutually joining the ply base body 32 and tyre forming member 33, and an inflation or shaping step 25 for inflating the principal tyre former 30 to shape the tyre main body 6. The steps 21 to 25 are executed in this order in this embodiment.

In the principal tyre former 30, a disk shaped flange 36 expandable in diameter is disposed at both ends of a cylindrical drum 34 having a bladder inflatable to a toroidal form by inflation with internal pressure, and bead locks 35 for fixing the bead cores 5. At the outer end of the flange 36, protrusions 36A provide point elements P for folding the cords. These are disposed at equal intervals in the circumferential direction. At both sides of the principal tyre former 30, side formers 37 having inflatable bladders are disposed concentrically with the drum 34.

Therefore, at the inner liner mounting step 21, as shown in FIG. 12(A), the inner liner rubber sheet 31 is wrapped in a cylindrical form on the outer circumference of the principal tyre former 30 between the flanges 36.

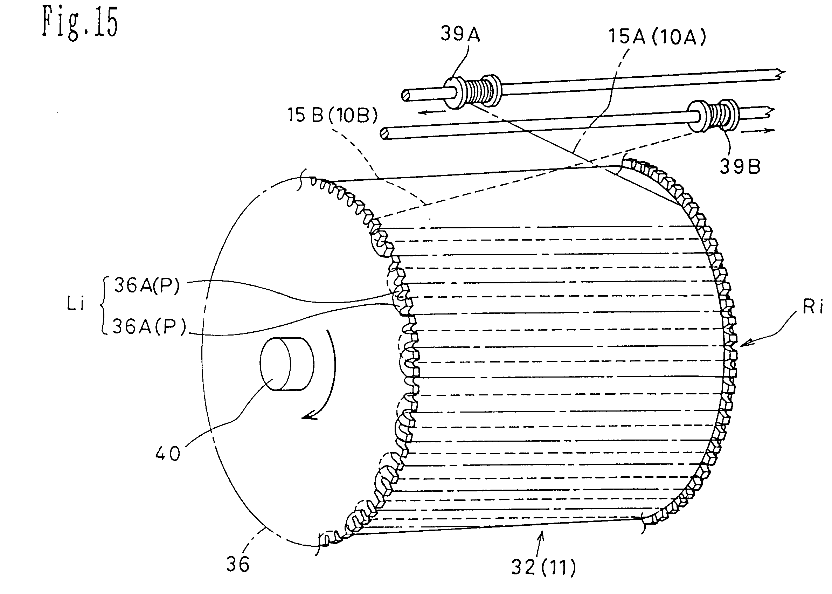

At the carcass ply forming step 22, as shown in FIG. 12(A) and FIG. 15, a pair of bobbins 39A, 39B holding separately two continuous cords 15A, 15B are moved reciprocally between one end position Y1 and other end position Y2 outside in the axial direction from flange 36. The bobbins 39A, 39B move parallel to an axial centre 40 and in mutually opposite directions. Every time the bobbins 39A, 39B change direction at positions Y1 and Y2, the principal tyre former 30 is inclined around its axis at pitch intervals of 2P. Thus, the continuous cords 15A, 15B are folded sequentially at both folding points Li, R1 alternately, while advancing the folding points Li, Ri in the circumferential direction, thereby forming a tubular ply base body 32 in a number of layers corresponding to the number of full turns of the principal tyre former 30.

At this time, the continuous cords 15A, 15B are formed parallel to each other without intersecting each other between both flanges 36. The bobbins 39A, 39B completing the formation of a required number of layers, or one layer of ply base body 32 in this embodiment, then wait at the positions Y1 and Y2. A thin insulation rubber sheet (not shown) is adhered to the outer circumference of the ply base body 32, and the continuous cords 15A, 15B are then covered by an inner liner rubber sheet 31 and the insulation rubber sheet, thereby preventing disturbance of the array of cords. It is preferred to coat the continuous cords 15A, 15B with rubber or adhesive preliminarily, but after forming the ply base body 32, the outer circumference or the inner circumference of the inner liner rubber sheet 31 may be coated afterwards.

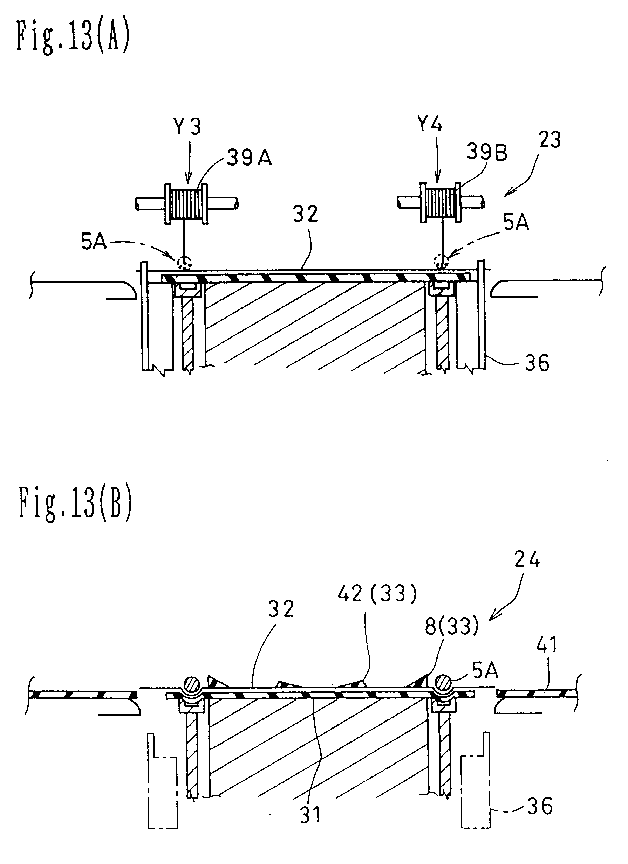

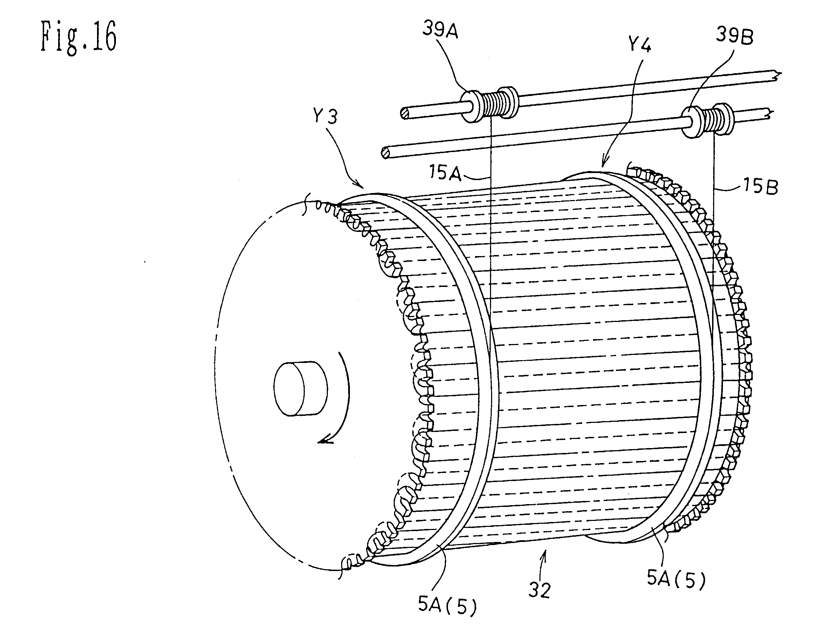

Next the bead forming step 23, as shown in FIG. 13(A) and FIG. 16, the bobbins 39A, 39B are moved to bead core forming positions Y3, Y4 axially inwards of the positions Y1, Y2, and by reciprocal motion of the bobbins 39A, 39B for the core width W and continuous rotation of the principal tyre former 30, the continuous cords 15A, 15B are wound spirally in multiple stages, to form the upper bead core portion 5A at both sides on the outer circumference of the ply base body 32. Incidentally, spiral winding of the continuous cords 15A, 15B may be started from either inside or outside in the tyre axial direction of the bead core 5.

When using one continuous cord 15, leaving a portion in the length necessary for forming the bead core 5 at one side, the carcass cord ply 11 and bead core 5 on the other sided are formed continuously, and then the bead core 5 of one side is formed by using the remaining length portion. When using three to N continuous cords 15, after forming the carcass cord ply 11, the bead core 5 of one side and other side are formed respectively by N/2 cords. In the case of an odd number, one cord is terminated near the array end position J, or the bead cores 5 are formed by combination of (N-1)/2 pieces and (N+1)/2 pieces respectively. From the viewpoint of simplification of former structure and control and enhancement of bead durability, it is preferred to use two continuous cords 15.

At the junction step 24, as shown in FIG. 13(B), tyre forming members 33 such as a rubber bead apex 8 and a rubber cushion 42 are joined mutually to the ply base body 32 with the bead cores 5. At this time, a side wall rubber 41, which is one of the tyre forming members 33, is disposed on a side former 37. When joining, it is preferred to press the tyre forming member 33 and ply base body 32 lightly by means of a roller or the like.

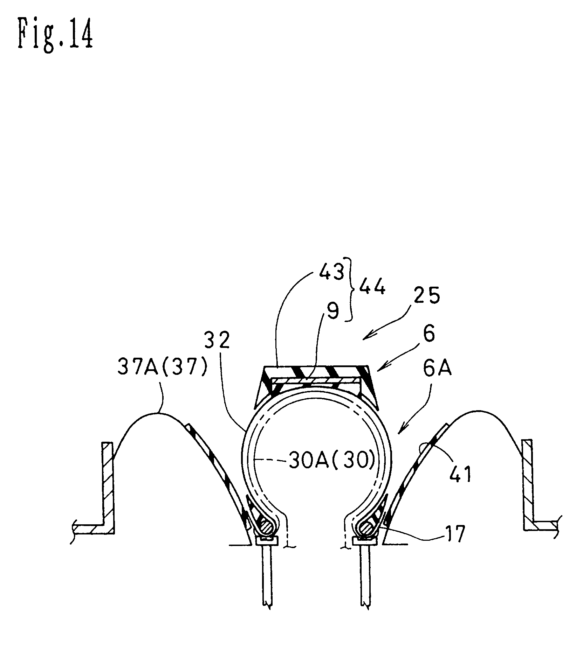

At the shaping step 25, as shown in FIG. 14, a cylindrical tread ring 44 integrating a preassembled belt layer 9 and tread rubber 43 is set apart radially outward from the ply base body 32 to wait, and then the bladder 30A of the principal tyre former 30 and bladder 37A of the side former 37 are inflated respectively.

At this time, as the bladder 30A is inflated, the ply base body 32 is shaped into a toroidal form between the bead cores 5, and pressed into the tread ring 55 to form a tyre carcass. The projecting portion 17 of the ply base body 32 projecting axially outwardly from the outer end of the bead core 5 is turned up together with the side wall rubber 41 by inflating bladders 37A, and is adhered to the tyre carcass 6A, thereby forming the full tyre main body 6 structure shown in FIG. 2 and FIG. 9(A). Prior to the inflation step 25, the flange 36 is contracted in diameter, and is withheld inside in the radial direction from the cylindrical drum 34, so that the projecting portion 17 is released to enable turning.

At the bead forming step 23, without forming the projecting portion 17, the continuous cords 15A, 15B may be wound by approximately aligning with the outer end of the ply base body 32. That is, by keeping the ply outer edges E1, E2 aligned with the axially outer end of the bead core 5, or slightly inward or outward from the outer end, the tyre main body 6 with the bead structure shown in FIG. 9(C) can be formed.

Prior to the junction step 24, meanwhile, the bladder 37A of the side former 37 may be inflated so the projection 17 is turned on to the radially outer surface of the bead core 5, and the bead apex rubber 8 is adhered, so that the tyre main body 6 in the bead structure as shown in FIG. 11(A), 11(B) may be formed.

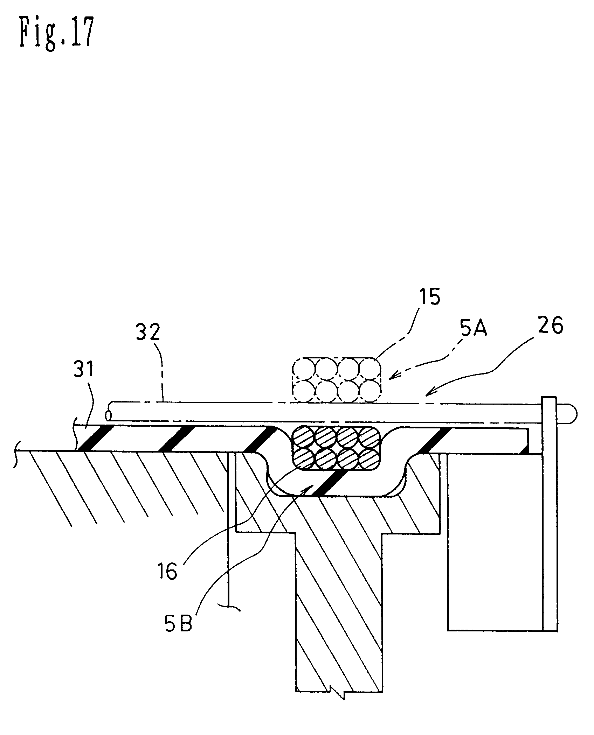

Alternatively, as shown in FIG. 17, the carcass ply forming step 22 may be preceded by a lower bead core forming step 26 for winding the lower bead cord 16 spirally on the inner liner rubber sheet 31, and thereby the lower bead core portion 5B may be formed freely. At this time, for the lower bead cord 16, either the same cord continuous with the continuous cord 15, or a separate cord not continuous may be used. The lower bead core forming step 26 may be replaced by a tape bead forming step forming the core portion 5C by overlaying a band of parallel cords.

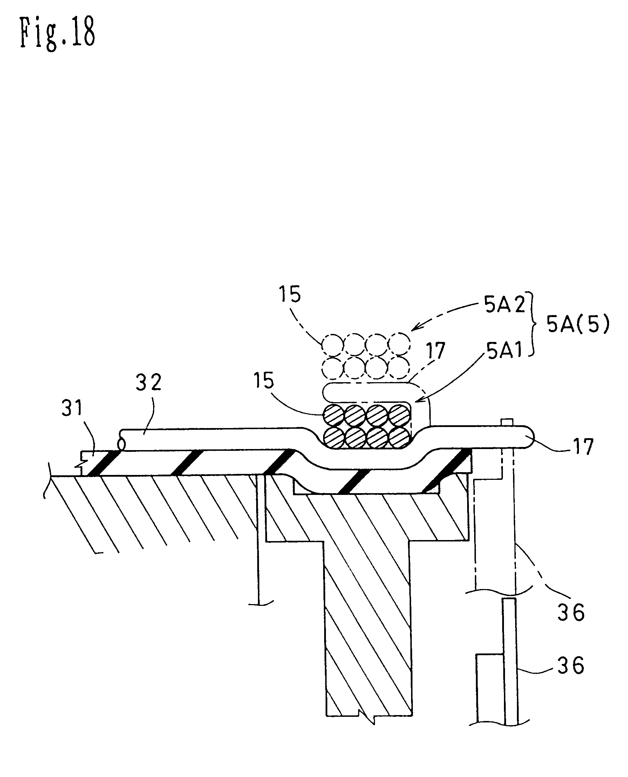

As shown in FIG. 18, at the bead forming step 23, the lower core portion 5A1 comprises spirally winding a continuous cord 15 on the ply base body 32 turning up the projection 17 on the lower core portion 5A1 by inflating the side former 37, and then winding the continuous cord 15 to form the upper core portion 5A2. As a result, the tyre main body 6 bead structure shown in FIG. 10(B) is formed. Alternatively, by executing the tape bead forming step in the midst of bead forming step 23, either one of the core portions 5A1, 5A2 may be formed in the core portion 5C.

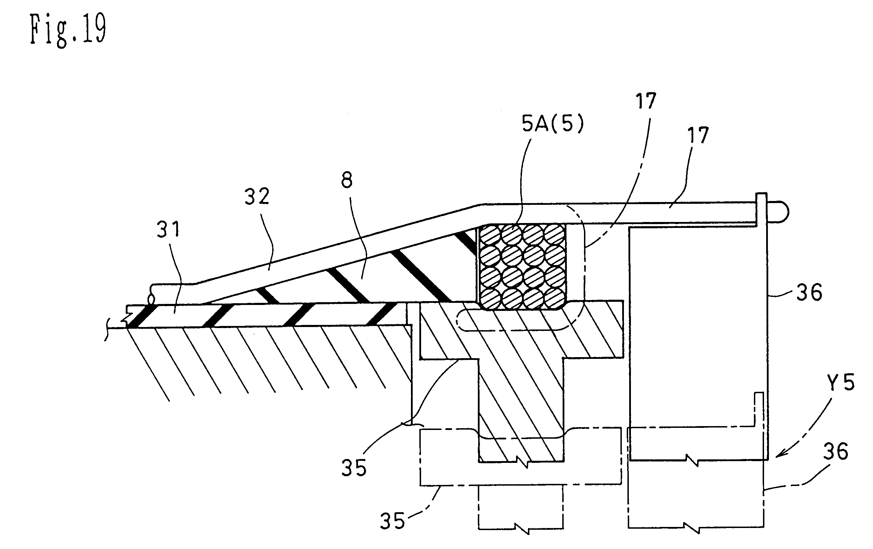

FIG. 19 shows the assembly of the bead structure shown in FIG. 9(B). As shown in the drawing, the inner liner rubber sheet 31 is formed between the bead locks 35, 35, and the bead core 5 is formed on the bead locks 35. The rubber bead apex 8 lying on the inner liner rubber sheet 31 is positioned on the bead core 5, and the ply base body 32 in the carcass ply forming step 22 is formed thereon. Therefore, at the bead forming step 23, in this embodiment, the bead core 5 is formed prior to the bead base body 32 at the inner side of the ply base body 32. After the bead lock 35 and flange 36 are contracted in diameter to their inward positions Y the projection 17 is turned from outside to inside. Later, after fitting a cushion rubber 42 and other tyre members 33, the junction or consolidation step 24 and the shaping step 25 are executed sequentially.

At the carcass ply forming step 22, the carcass play 11 having a bias structure as shown in FIG. 6 can be formed, and at this time, at the junction step 24, a tread ring 44, a breaker and tread rubber at a cord angle close to the carcass ply are fitted to the middle of the ply base body 32 as one of the tyre component member 33. In the shaping step 25, the breaker and tread rubber are then inflated in to toroidal form together with the ply base body 32, thereby forming a tyre main body 6 having a bias structure. Meanwhile, to enhance the steering stability by raising the bead rigidity, a reinforcing layer of organic fibre or metal fibre cord may be added to the bead 4.

### EXAMPLES

According to the above manufacturing method, heavy duty radial tyres with the structure shown in FIG. 1 were experimentally fabricated according to the specifications in Tables 1 and 2 in the tyre size of 11R22.5. Trial tyres were tested and compared in respect of bead durability (bead damage), bead heat generation, bead bases deformation, and tyre weight.
The test conditions were as follows.

### 1) Bead heat generation

Test tyres were fitted to 15° tapered seat single piece wheels of size of 22.5 x 8.25, and driven on a drum at conditions of internal inflation pressure 8.00 kgf/cm², load 9000 kg and speed 20 km/h. The bead surface temperature was measured every 1000 km of running distance, and the mean was expressed as an index with the conventional tyre as 100. The smaller value means the lower heat generation, that is, excellent.

### 2) Bead durability (bead damage)

After driving on the drum for 5000 km in the same conditions, the tyres were disassembled, and the presence or absence of loose plies was investigated. In Tables 1 and 2, # indicates absence of loose plies, $ means occurrence of looseness at the end of the turned up portion of carcass ply, and X indicates occurrence of separation of carcass.

### 3) Bead base deformation

As indicated by the single dot chain line in FIG. 2, after driving on the drum for 5000 km in the same conditions, the deformation height ha of lifting deformation of the toe t of the bead base of the tyre was measured, and expressed as an the index with the tyre before driving taken as 100. The larger value means the smaller deformation, that is, excellent.

### 4) Tyre weight

The weight of test tyres was expressed as an index with the conventional tyre set at 100. The smaller value means the lighter weight, that is, excellent.
As shown in Tables 1 and 2, for tyres of the embodiments made according to the manufacturing method of the invention, if the bead core and carcass are made of low modulus cords such as nylon and polyester, although inferior in bead heat generation and bead deformation to the conventional tyres made of steel cords, have enhanced bead durability (bead damage). In particular, when using organic fibre cords having an initial tensile elasticity of 1500 kgf/mm² or more, the bead heat generation and bead deformation are also equivalent to or superior to the performance of the conventional tyre of steel cords (initial tensile elasticity about 19000 kgf/mm²).

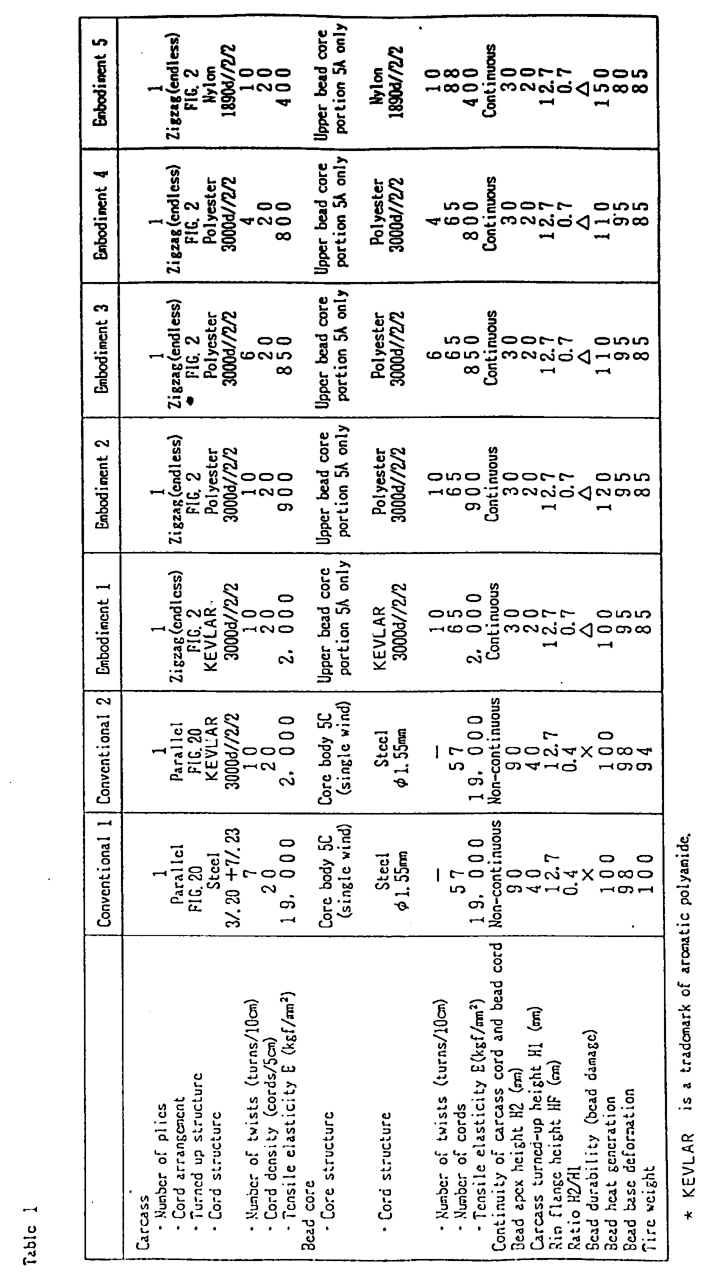

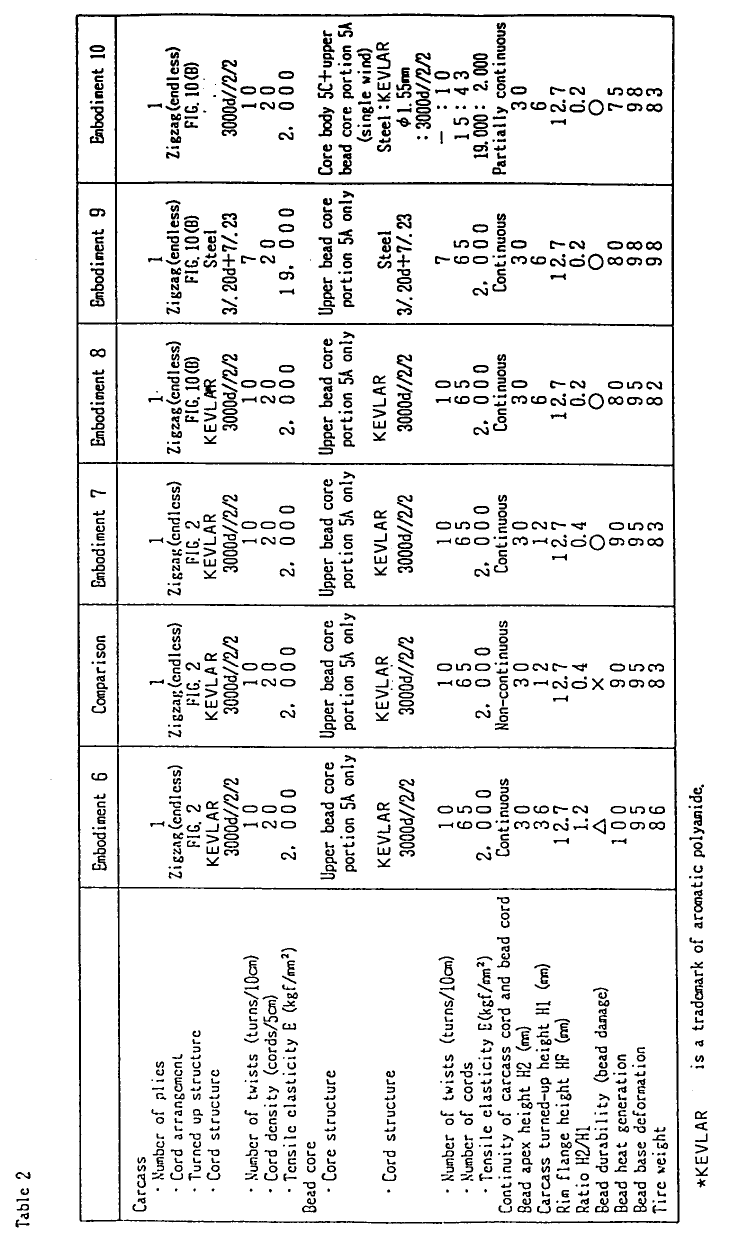

## Claims

1. A pneumatic tyre comprising a carcass (7) extending from a tread (2) through side-walls (3) to a bead core (5) in each of two bead parts (9), at least one carcass cord ply (11), said carcass cord ply (11) provided with a multiplicity of folding points (P) arranged in the tyre's circumferential direction at both outer edges of the carcass cord ply (11), and formed by at least one endless carcass cord (10) extending zigzag in the tyre's circumferential direction while being folded around the respective folding points (P) at both outer edges alternately to right and left, and said bead core (5) having an upper bead core portion (5A) disposed radially outside said carcass cord ply (11) in the bead part (4) and formed by an upper bead cord (14,15) being spirally wound in one or more stages in the tyre's circumferential direction, characterised in that said upper bead cord (14,15) is continuously wound to said endless carcass cord (10).

2. A pneumatic tyre of claim 1, characterised in that said carcass cord ply (11) has a parallel cord arrangement, in which the endless carcass cord (10) is arranged substantially parallel without intersecting, in a ply main portion straddling between the bead cores (5).

3. A pneumatic tyre of claim 1 or 2, characterised in that said bead core (5) has a lower bead core portion (5B) disposed radially inside said carcass cord ply (11) in the bead part (4) and formed by a lower bead cord (16) either continuous to or discontinuous from the carcass cord (10) and spirally wound in one or more stages in the tyre's circumferential direction.

4. A pneumatic tyre of any of claims 1 to 3, characterised in that both outer edges (E1,E2) of the carcass cord ply (11) are terminated inside the bead core (5).

5. A pneumatic tyre of any of claims 1 to 3, characterised in that both outer edges (E1,E2) of the carcass cord ply (11) are substantially terminated on a radially inner surface of the bead core (5).

6. A pneumatic tyre of any of claims 1 to 3, characterised in that both outer ends (E1,E2) of the carcass cord ply (11) project from the bead core (5) in the tyre axial direction so as to form a projecting portion, said projecting portion being turned up radially outwardly and terminated on a side surface of the bead core (5) or a rubber bead apex (8) positioned radially outside the bead core (5).

7. A pneumatic tyre of any of claims 1 to 3, characterised in that both outer edges (E1,E2) of the carcass cord ply (11) project from the bead core (5) in the tyre axial direction so as to form a projecting portion, said projecting portion being turned up radially outwardly, and passing through between the bead core (5) and a rubber bead apex (8) positioned radially outside the bead core(5), and terminated between the bead core (5) and the rubber bead apex (8) or on a side surface of the rubber bead apex (8).

8. A manufacturing method for a pneumatic tyre with a carcass extending from a tread through side-walls to a bead core in each of two bead parts, comprising an inner liner mounting step (21) of rolling an inner liner rubber sheet (31) around an outer circumference of a principal tyre former (30) having a cylindrical form and expandable into toroidal form; a carcass ply forming step (22) of forming a tubular ply base body (32) for carcass ply by layering, in the circumferential direction, a carcass cord on the outer circumference of the inner liner rubber sheet (31) while folding alternately to right and left at both sides of the principal tyre former (30); a bead forming step (23) for forming a bead core (5) by spirally winding a bead cord (15) to the carcass cord (10) in a small width in one or more stages at both sides of the ply base body (32); a junction step (24) for mutually joining the tyre forming member (33) containing a rubber bead apex (8) to the ply base body (32) provided with the bead core (5); and a shaping or inflation step (25) of inflating the principal tyre former to obtain a raw cover tyre, characterized by winding said bead cord (15) continuously to said carcass cord (10).

9. A manufacturing method of pneumatic tyre of claim 8, characterised in that in said carcass ply forming step (22) the carcass cords (10) are laid substantially parallel without intersecting each other in a ply main portion extending between the bead cores (5).

10. A manufacturing method of pneumatic tyre of claim 8, characterised in that said inflation step (25) includes a side-wall forming step of joining side-wall rubbers by inflation of side formers provided at both sides of the principal tyre former.

11. A manufacturing method of pneumatic tyre of claim 8,9 or 10, characterised by said bead core (5) having an upper bead core portion (5a) disposed radially outside the carcass ply (11) and a lower bead core portion (5b) disposed radially inside the carcass ply (11), and the manufacturing method comprises a lower bead core forming step of forming the lower bead core portion (5b) by spirally winding a lower bead cord (16) continuous or not continuous to the carcass cord (10) in a small width (W) in one or more stages prior to said carcass ply (11) forming step.

12. A manufacturing method of pneumatic tyre of any of claims 8 to 11, characterised in that said bead forming step forms the bead core (5) such that both side edges (E1,E2) of the ply base body are aligned with the axially outside surface of the bead core (5).

13. A manufacturing method of pneumatic tyre of any of claims 8 to 11, characterised in that said bead forming step forms the bead core (5) such that both side edges (E1,E2) of the ply base body are aligned and held inwards of the axially outside surface of the bead core.

14. A manufacturing method of pneumatic tyre of any of claims 8 to 11, characterised in that said bead forming step forms the bead core (5) such that both side edges (E1,E2) of the ply base body project from the axially outside surface of the bead core (5).

## Patentansprüche

1. Luftreifen, umfassend eine Karkasse (7), die sich von einem Laufstreifen (2) durch Seitenwände (3) hindurch zu einem Wulstkern (5) in jedem von zwei Wulstteilen (9) erstreckt, mindestens eine Karkaßcordlage (11), wobei die Karkaßcordlage (11) mit einer Mehrzahl von Faltpunkten (P) versehen ist, die in der Umfangsrichtung des Reifens an beiden Außenkanten der Karkaßcordlage (11) angeordnet sind, und aus mindestens einem endlosen Karkaßcord (10) gebildet ist, der sich zickzackförmig in der Umfangsrichtung des Reifens erstreckt, während er um die jeweiligen Faltpunkte (P) an beiden Außenkanten abwechselnd nach rechts und nach links herum gefaltet ist, und wobei der Wulstkern (5) einen oberen Wulstkernabschnitt (5A) aufweist, der radial außerhalb der Karkaßcordlage (11) in dem Wulstteil (4) angeordnet ist und aus einem oberen Wulstcord (14, 15) gebildet ist, der spiralförmig in einer oder mehreren Stufen in der Umfangsrichtung des Reifens gewickelt ist,
dadurch **gekennzeichnet,**
daß der obere Wulstcord (14, 15) Zusammenhängend mit dem endlosen Karkaßcord (10) gewickelt ist.

2. Luftreifen nach Anspruch 1,
dadurch gekennzeichnet, daß
die Karkaßcordlage (11) eine parallele Cordanordnung aufweist, in der der endlose Karkaßcord (10) im wesentlichen parallel ohne zu schneiden in einem Lagenhauptabschnitt angeordnet ist, der sich zwischen den Wulstkernen (5) erstreckt.

3. Luftreifen nach Anspruch 1 oder 2,
dadurch gekennzeichnet, daß
der Wulstkern (5) einen unteren Wulstkernabschnitt (5B) aufweist, der radial innerhalb der Karkaßcordlage (11) in dem Wulstteil (4) angeordnet ist und aus einem unteren Wulstcord (16) entweder zusammenhängend oder nicht zusammenhängend mit dem Karkaßcord (10) gebildet ist und spiralförmig in einer oder mehreren Stufen in der Umfangsrichtung des Reifens gewickelt ist.

4. Luftreifen nach einem der Ansprüche 1 bis 3,
dadurch gekennzeichnet, daß
beide Außenkanten (E1, E2) der Karkaßcordlage (11) innerhalb des Wulstkerns (5) beendigt sind.

5. Luftreifen nach einem der Ansprüche 1 bis 3,
dadurch gekennzeichnet, daß
beide Außenkanten (E1, E2) der Karkaßcordlage (11) im wesentlichen an der radial inneren Fläche des Wulstes (5) beendigt sind.

6. Luftreifen nach einem der Ansprüche 1 bis 3,
dadurch gekennzeichnet, daß beide Außenenden (E1, E2) der Karkaßcordlage (11) von dem Wulstkern (5) in der Axialrichtung des Reifens vorspringen, so daß sie einen Vorsprungabschnitt bilden, wobei der Vorsprungabschnitt radial nach außen umgeschlagen ist und an einer Seitenfläche des Wulstkerns (5) oder einem Gummiwulstkernreiter (8) beendigt ist, der radial außerhalb des Wulstkerns (5) angeordnet ist.

7. Luftreifen nach einem der Ansprüche 1 bis 3,
dadurch gekennzeichnet, daß
beide Außenkanten (E1, E2) der Karkaßcordlage (11) von dem Wulstkern (5) in der Axialrichtung des Reifens vorspringen, so daß ein Vorsprungabschnitt gebildet ist, wobei der Vorsprungabschnitt radial nach außen umgeschlagen ist und zwischen dem Wulstkern (5) und einem Gummiwulstkernreiter (8) hindurch verläuft, der radial außerhalb des Wulstkerns (5) angeordnet ist, und zwischen dem Wulstkern (5) und den Gummiwulstkernreiter (8) oder an einer Seitenfläche des Gummiwulstkernreiters (8) beendigt ist.

8. Herstellungsverfahren für einen Luftreifen mit einer Karkasse, die sich von einem Laufstreifen durch Seitenwände hindurch zu einem Wulstkern in jedem von Zwei Wulstteilen erstreckt, umfassend einen Schritt zum Montieren einer Innenseele (21), bei dem eine Innenseelengummibahn (31) um einen Außenumfang einer Hauptreifenaufbautrommel (30), die eine zylindrische Form aufweist und zu einer Torusform ausgedehnt werden kann, herumgerollt wird; einen Schritt zum Ausbilden einer Karkaßlage (22), bei dem ein rohrförmiger Lagenunterbau (32) für eine Karkaßlage gebildet wird, indem ein Karkaßcord in der Umfangsrichtung auf den Außenumfang der Innenseelengummibahn (31) geschichtet wird, während er abwechselnd nach rechts und nach links auf beiden Seiten der Hauptreifenaufbautrommel (30) gefaltet wird;
einen Schritt zum Ausbilden eines Wulstes (23), um einen Wulstkern (5) auszubilden, indem ein Wulstcord (15) an den Karkaßcord (10) mit einer kleinen Breite in einer oder mehreren Stufen auf beiden Seiten des Lagenunterbaus (32) spiralförmig gewickelt wird; einen Verbindungsschritt (24), um das Reifenformungselement (33), das einen Gummiwulstkernreiter (8) enthält, mit dem Lagenunterbau (32) zu verbinden, der mit dem Wulstkern (5) versehen ist; und einem Formungs- oder Aufblähschritt (25), bei dem die Hauptreifenaufbautrommel aufgebläht wird, um einen rohen Reifenaufbau zu erhalten,
dadurch gekennzeichnet,
daß der Wulstcord (15) zusammenhängend mit dem Karkaßcord (10) gewickelt wird.

9. Herstellungsverfahren für einen Luftreifen nach Anspruch 8,
dadurch gekennzeichnet, daß
bei dem Schritt zum Ausbilden einer Karkaßlage (22) die Karkaßcorde (10) im wesentlichen parallel ohne einander Zu schneiden in einem Lagenhauptabschnitt gelegt werden, der sich zwischen den Wulstkernen (5) erstreckt.

10. Herstellungsverfahren für einen Luftreifen nach Anspruch 8,
dadurch gekennzeichnet, daß
der Aufblähschritt (25) einen Schritt zum Ausbilden einer Seitenwand umfaßt, wobei Seitenwandgummis durch Aufblähen von Seitenformern verbunden werden, die an beiden Seiten der Hauptreifenaufbautrommel vorgesehen sind.

11. Herstellungsverfahren für einen Luftreifen nach Anspruch 8, 9 oder 10,
dadurch gekennzeichnet, daß
der Wulstkern (5) einen oberen Wulstkernabschnitt (5a) aufweist, der radial außerhalb der Karkaßlage (11) angeordnet ist, und einen unteren Wulstkernabschnitt (5b) aufweist, der radial innerhalb der Karkaßlage (11) angeordnet ist, und daß das Herstellungsverfahren einen Schritt zum Ausbilden eines unteren Wulstkerns umfaßt, bei dem der untere Wulstkernabschnitt (5b) ausgebildet wird, indem ein unterer Wulstcord (16) zusammenhängend oder nicht zusammenhängend mit dem Karkaßcord (10) mit einer kleinen Breite (W) in einer oder mehreren Stufen vor dem Schritt zum Ausbilden einer Karkaßlage (11) spiralförmig gewickelt wird.

12. Herstellungsverfahren für einen Luftreifen nach einem der Ansprüche 8 bis 11,
dadurch gekennzeichnet, daß
bei dem Schritt zum Ausbilden eines Wulstes der Wulstkern (5) derart gebildet wird, daß beide Seitenkanten (E1, E2) des Lagenunterbaus mit der axial äußeren Fläche des Wulstkerns (5) ausgerichtet sind.

13. Herstellungsverfahren für einen Luftreifen nach einem der Ansprüche 8 bis 11,
dadurch gekennzeichnet, daß
bei dem Schritt zum Ausbilden eines Wulstes der Wulstkern (5) derart ausgebildet wird, daß beide Seitenkanten (E1, E2) des Lagenunterbaus mit der axial äußeren Fläche des Wulstkerns ausgerichtet und in bezug auf diese innen gehalten sind.

14. Herstellungsverfahren für einen Luftreifen nach einem der Ansprüche 8 bis 11,
dadurch gekennzeichnet, daß
bei dem Schritt zum Ausbilden eines Wulstes der Wulstkern (5) derart ausgebildet wird, daß beide Seitenkanten (E1, E2) des Lagenunterbaus von der axial äußeren Fläche des Wulstkerns (5) vorspringen.

## Revendications

1. Pneumatique comprenant une carcasse (7) dépassant d'une bande de roulement (2) dans des flancs (3) vers une tringle (5) placée dans chacune de deux parties (9) de talon, une nappe au moins (11) de câblé de carcasse, la nappe (11) de câblé de carcasse ayant plusieurs points de pliage (P) placés dans la direction circonférentielle du pneumatique aux deux bords externes de la nappe (11) de câblé de carcasse et étant formée par au moins un câblé sans fin de carcasse (10) disposé en zigzag dans la direction circonférentielle du pneumatique en étant plié autour des points respectifs de pliage (P) aux deux bords externe alternativement à droite et à gauche, la tringle (5) ayant une partie supérieure (5A) de tringle placée radialement à l'extérieur de la nappe (11) de câblé de carcasse dans la partie de talon (4) et étant formée par un câblé supérieur de talon (14, 15) qui est enroulé en spirale en une ou plusieurs étapes dans la direction circonférentielle du pneumatique, caractérisé en ce que le câblé supérieur de talon (14, 15) est enroulé de façon continue comme prolongement du câblé sans fin de carcasse (10).

2. Pneumatique selon la revendication 1, caractérisé en ce que la nappe (11) de câblé de carcasse a une disposition parallèle de câblé dans laquelle le câblé sans fin de carcasse (10) est placé en direction pratiquement parallèle sans intersection, dans une partie principale de nappe qui chevauche entre les tringles (5) .

3. Pneumatique selon la revendication 1 ou 2, caractérisé en ce que la tringle (5) a une partie inférieure (5B) de tringle disposée radialement à l'intérieur de la nappe (11) de câblé de carcasse dans la partie (4) de talon et est formée par un câblé inférieur (16) de talon qui prolonge sous forme continue ou non le câblé de carcasse (10) et qui est enroulé en spirale en une ou plusieurs étapes dans la direction circonférentielle du pneumatique.

4. Pneumatique selon l'une des revendications 1 à 3, caractérisé en ce que les deux bords externes (E1, E2) de la nappe (11) de câblé de carcasse se terminent à l'intérieur de la tringle (5).

5. Pneumatique selon l'une quelconque des revendications 1 à 3, caractérisé en ce que les deux bords externes (E1, E2) de la nappe de câblé de carcasse (11) se terminent pratiquement sur une surface radialement interne de la tringle (5).

6. Pneumatique selon l'une quelconque des revendications 1 à 3, caractérisé en ce que les deux extrémités externes (E1, E2) de la nappe de câblé de carcasse (11) dépassent de la tringle (5) dans la direction axiale du pneumatique pour former une partie en saillie, cette partie en saillie étant repliée radialement vers l'extérieur et se terminant sur une surface latérale de la tringle (5) ou d'une pointe (8) de bourrage de talon de caoutchouc disposée radialement à l'extérieur de la tringle (5).

7. Pneumatique selon l'une quelconque des revendications 1 à 3, caractérisé en ce que les deux bords externes (E1, E2) de la nappe de câblé de carcasse (11) dépassent de la tringle (5) dans la direction axiale du pneumatique pour former une partie en saillie, cette partie en saillie étant repliée radialement vers l'extérieur, et passant entre la tringle (5) et la pointe (8) de bourrage de talon de caoutchouc positionnée radialement à l'extérieur de la tringle (5), et se terminant entre la tringle (5) et la pointe (8) de bourrage de talon de caoutchouc ou sur une surface latérale de la pointe (8) de bourrage de talon de caoutchouc.

8. Procédé de fabrication d'un pneumatique ayant une carcasse qui s'étend d'une bande de roulement dans des flancs vers une tringle de chacune de deux parties de talon, comprenant une étape (21) de montage d'une doublure interne comprenant l'enroulement d'une feuille interne (31) de caoutchouc de doublure autour d'une circonférence externe d'un organe formateur principal (30) du pneumatique ayant une forme cylindrique et dilatable à une forme toroïdale, une étape (22) de formation d'une nappe de carcasse comprenant la formation d'un corps tubulaire (32) de base de nappe destiné à une nappe de carcasse par disposition en couche, en direction circonférentielle, d'un câblé de carcasse à la circonférence externe de la feuille interne (31) de caoutchouc de doublure avec pliage en alternance à droite et à gauche aux deux côtés de l'organe formateur principal (30) du pneumatique, une étape (23) de formation de talon destinée à former une tringle (5) par enroulement en spirale d'un câblé de talon (15) sur le câblé de carcasse (10) sur une petite largeur en une ou plusieurs étapes aux deux côtés du corps (32) de base de nappe, une étape (24) de jonction destinée à raccorder mutuellement l'organe formateur (33) du pneumatique contenant une pointe (8) de bourrage de talon de caoutchouc sur le corps (32) de base de nappe ayant la tringle (5), et une étape (25) de mise en forme ou de gonflage comprenant le gonflage de l'organe formateur principal du pneumatique pour l'obtention d'un pneumatique à recouvrement non vulcanisé, caractérisé par enroulement du câblé de talon (15) afin qu'il prolonge de façon continue le câblé de carcasse (10).

9. Procédé de fabrication d'un pneumatique selon la revendication 8, caractérisé en ce que, dans l'étape (22) de formation de la nappe de carcasse, les câblés (10) de carcasse sont disposés en direction pratiquement parallèle sans se recouper dans une partie principale de nappe qui s'étend entre les tringles (5).

10. Procédé de fabrication d'un pneumatique selon la revendication 8, caractérisé en ce que l'étape de gonflage (25) comporte une étape de formation de flanc avec jonction des caoutchoucs des flancs par gonflage des organes formateurs latéraux placés des deux côtés de l'organe formateur principal du pneumatique.

11. Procédé de fabrication d'un pneumatique selon la revendication 8, 9 ou 10, caractérisé en ce que la tringle (5) a une partie supérieure (5a) de tringle placée radialement à l'extérieur de la nappe de carcasse (11) et une partie inférieure (5b) disposée radialement à l'intérieur de la nappe de carcasse (11), et le procédé de fabrication comprend une étape de formation de partie inférieure de tringle comprenant la formation de la partie inférieure (5b) de tringle par enroulement en spirale d'un câblé inférieur de talon (16) afin qu'il prolonge sous forme continue ou non le câblé de carcasse (10) sur une petite largeur (W) en une ou plusieurs étapes avant l'étape de formation de la nappe de carcasse (11).

12. Procédé de fabrication d'un pneumatique selon l'une quelconque des revendications 8 à 11, caractérisé en ce que l'étape de formation de talon forme la tringle (5) de manière que les deux bords latéraux (E1, E2) du corps de base de nappe soient alignés sur la surface axialement externe de la tringle (5).

13. Procédé de fabrication d'un pneumatique selon l'une quelconque des revendications 8 à 11, caractérisé en ce que l'étape de formation de talon forme la tringle (5) de manière que les deux bords latéraux (E&, E2) du corps de base de nappe soient alignés et maintenus vers l'intérieur de la surface axialement externe de la tringle.

14. Procédé de fabrication d'un pneumatique selon l'une quelconque des revendications 8 à 11, caractérisé en ce que l'étape de formation de talon forme la tringle (5) de manière que les deux bords latéraux (E1, E2) du corps de base de nappe dépassent de la surface axialement externe de la tringle (5).
